Europäisches Patentamt

European Patent Office

Office européen des brevets

(19)

(11) Veröffentlichungsnummer : **0 429 504 B1**

(12) **EUROPÄISCHE PATENTSCHRIFT**

(45) Veröffentlichungstag der Patentschrift :
06.10.93 Patentblatt 93/40

(21) Anmeldenummer : **89909190.4**

(22) Anmeldetag : **11.08.89**

(86) Internationale Anmeldenummer :
**PCT/EP89/00946**

(87) Internationale Veröffentlichungsnummer :
**WO 90/02154 08.03.90 Gazette 90/06**

(51) Int. Cl.[5] : **C08L 23/16,** C08L 23/04,
B29C 63/00, // (C08L23/16,
23:04, 91:00), (C08L23/04,
23:16, 91:00)

(54) **FORMMASSE AUS ELASTOMEREN POLYOLEFINKAUTSCHUKEN, POLYETHYLEN UND/ODER ETHYLENCOPOLYMEREN UND ZUSATZSTOFFEN SOWIE DEREN VERWENDUNG FÜR ELASTISCHE DICHTUNGSBAHNEN.**

(30) Priorität : **17.08.88 DE 3827904**

(43) Veröffentlichungstag der Anmeldung :
**05.06.91 Patentblatt 91/23**

(45) Bekanntmachung des Hinweises auf die
Patenterteilung :
**06.10.93 Patentblatt 93/40**

(84) Benannte Vertragsstaaten :
**AT BE CH DE FR GB IT LI LU NL SE**

(56) Entgegenhaltungen :
**FR-A- 2 076 302**
**FR-A- 2 374 359**
**FR-A- 2 580 288**

(73) Patentinhaber : **HÜLS TROISDORF
AKTIENGESELLSCHAFT
D-53839 Troisdorf (DE)**

(72) Erfinder : **KLAAR, Karlo
Bergischer Ring 11
D-5210 Troisdorf-Sieglar (DE)**
Erfinder : **SPIELAU, Paul
Van-Gogh-Platz 10
D-5210 Troisdorf-Eschmar (DE)**

EP 0 429 504 B1

Jouve, 18, rue Saint-Denis, 75001 PARIS

## Beschreibung

Formmasse aus elastomeren Polyolefinkautschuken, Polyethylen und/oder Ethylencopolymeren und Zusatzstoffen sowie deren Verwendung für elastische Dichtungsbahnen

### Technisches Gebiet

Die Erfindung betrifft eine Formmasse gemäß dem Oberbegriff des Anspruchs 1 sowie deren Verwendung für elastische Dichtungsbahnen.

### Stand der Technik

Dichtungsbahnen bzw. -folien zum Abdichten von Flächen im Hoch-, Tief- und Ingenieurbau müssen eine Reihe verschiedener Eigenschaften aufweisen, um den gestellten Anforderungen bezüglich Wasserdichtigkeit und Witterungsbeständigkeit zu genügen. Zu diesen Eigenschaften gehören hohe mechanische Festigkeit und eine ausreichende Dehnung sowohl bei Raumtemperatur als auch höhere Temperaturen bis etwa 80 °C, langjährige Beständigkeit, leichte Verbindbarkeit der Folienbahnen untereinander zu größeren Planen und Alterungsbeständigkeit sowie biologische Resistenz. Es sind nun bereits Dichtungsbahnen unterschiedlichster Zusammensetzung auf Basis thermoplastischer Kunststoffe oder elastomerer vulkanisierbarer oder vulkanisierter Kunststoffe oder thermoplastischer Kunststoffe mit elastomeren Eigenschaften bekanntgeworden, die jedoch neben vorteilhaften Eigenschaften stets auch Nachteile aufweisen (siehe z.B. DE-AS 15 70 352, DE-AS 15 95 442, DE-OS 22 19 147, DE-24 10 572-A1, DE-24 15 850-A1, DE-25 10 162-A1, DE-26 21 825-B2, DE-26 28 741-A1 und DE-26 57 272-A1).

Die bekannten thermoplastischen Dichtungsbahnen, z.B. auf der Basis von Weich-Polyvinylchlorid, Polyisobutylen, Acrylpolymeren oder mit Bitumen modifizierten Thermoplasten lassen sich zwar einfach und einwandfrei an den Nahtstellen dicht verschweißen, sie sind jedoch gegen Temperatureinflüsse empfindlich. Diesen Nachteilen versucht man durch Auf- bzw. Einkaschieren von Geweben oder Vliesen aus textilen Fasern oder Glasfasern entgegenzuwirken, was jedoch nur teilweise erfolgreich ist.

Die bekannten Dichtungsbahnen aus vulkanisierbaren Kunststoffen, z.B. auf Basis Chloroprenkautschuk, Ethylen-Propylen-Dien-Terpolymeren, chlorsulfoniertem Polyethylenkautschuk oder Butylkautschuk genügen zwar den mechanischen Festigkeitsanforderungen bei Raumtemperatur und sind witterungsbeständig, haben jedoch den erheblichen Nachteil, daß die nicht vulkanisierten Folien (z.B. EP-A- 0 082 490) den mechanischen Anforderungen bei erhöhten Temperaturen nicht genügen und die vulkanisierten Dichtungsbahnen sich nicht miteinander verschweißen lassen, sondern nur schwer mittels Kleber oder Klebebänder o. dgl. dauerhaft dicht miteinander verbunden werden können (siehe z.B. DE-OS 25 10 162).

Neuerdings ist man dazu übergegangen, anstelle der vorangehend beschriebenen, aus einem Material aufgebauten einschichtigen, ggf. mit einer Verstärkungseinlage versehenen Kunststoff-Dichtungsbahnen, auch mehrschichtige Dichtungsbahnen aus vulkanisierbaren Materialien herzustellen, wobei die Außenschichten gar nicht oder nur so weit ausvulkanisiert sind, daß sie noch thermisch oder durch Lösungsmittel oder Quellschweißmittel verschweißbar sind und mindestens eine ausvulkanisierte Schicht vorgesehen ist, siehe z.B. die AT-A- 290 612 und die DE-OS 26 28 741. Nachteilig hierbei ist jedoch die Abhängigkeit von Art und Menge des eingesetzten Vulkanisationsbeschleunigers sowie der Zeitpunkt der Ausvulkanisation.

Aus der DE-OS 22 19 147 ist eine Dichtungsbahn auf der Basis von EPDM bekannt, die neben EPDM Polyethylen, Polyisobutylen und Füllstoffe enthält und bei Raumtemperatur eine Bruchdehnung von 500 bis 600 % aufweist. Derartige Folien weisen bei höheren Temperaturen sehr geringe Reißfestigkeiten und Reißdehnungen auf.

Aus der DE-OS 24 10 572 ist eine Dichtungsbahn auf der Basis von Polystyrol-Polybutadien-Blockcopolymeren bekannt, die bei 80 °C eine höhere Bruchdehnung von max. 210 % aufweist. Folien auf Basis von Polystyrol-Polybutadien-Blockcopolymeren weisen eine unbefriedigende Licht- und Ozonbeständigkeit auf.

Aus der DE-OS 26 21 825 ist ebenfalls eine Abdichtungsfolie auf Basis von Polystyrol-Polybutadien-Blockcopolymeren mit Zusätzen von chlorsulfoniertem Polyethylen bekannt mit sehr hohen Reißdehnungen von bis zu 660 % bei 80 °C. Bei Zusatz von Füllstoffen nimmt der Wert der Reißdehnung jedoch auf Werte unter 300 % ab. Dieser Schrift ist weiterhin der Hinweis zu entnehmen, daß durch Zusatz von Polyethylen anstelle von chlorsulfoniertem PE nur geringe Reißdehnungen bei 80 °C zu erreichen sind.

Aus der DE-OS 26 57 272 ist eine thermoplastische Masse zur Herstellung von Abdichtungsfolien bekannt, die zur Erzielung guter Festigkeiten bei erhöhten Temperaturen neben 100 Gew.-Teilen EPDM 50 bis 150 Gew.-Teile eines Polyethylens mit einem MFI (190/2,16) von 0,2 bis 50 [g/10 min] sowie 30 bis 150 Teile Ruß und ggf. Bitumen, Mineralöl, Kreide und Gleitmittel enthält. Diese Folien erreichen Reißfestigkeiten von bis zu 4,7 [N/mm²] und Reißdehnungen von bis zu 420 % bei 70 °C.

Diese mechanischen Werte sind für viele praktischen Anwendungen zu gering, zudem erreichen die Bahnen gemäß der DE-OS 26 57 272 nur bei sehr hohen Polyethylenanteilen Reißdehnungen von mehr als 300 %.

Abdichtungsbahnen aus der gattungsgemäßen Formmasse mit hohen PE-Anteilen sind so steif, daß sie für den Einsatz als Dachdichtungsbahnen ungeeignet sind.

**Aufgabe der Erfindung**

Aufgabe der vorliegenden Erfindung ist es, eine zur Herstellung von Dichtungsbahnen geeignete Formmasse zur Verfügung zu stellen, wobei die hieraus extrudierten oder kalandrierten Bahnen eine verbesserte Reißdehnung bei 80 °C aufweisen. Insbesondere sollen die Bahnen bei guter Reißfestigkeit bei 80 °C eine Reißdehnung von > 600 % bei 80 °C sowie eine möglichst geringe Steifigkeit aufweisen.

**Darstellung der Erfindung**

Die Erfindung löst diese Aufgabe durch eine Formmasse, enthaltend auf

| | |
|---|---|
| 100 Gew.-Tle. | Polyolefinkautschuk: |
| 25 bis 150 Gew.-Tle. | Polyethylen und/oder Ethylencopolymer mit einem MFI (190/2,16) < 0,1 [g/10 min] nach DIN 53 735 und |
| 16 bis 28 Gew.-Tle. | eines Mineralöls. |

Zusätzlich kann die Formmasse weitere Komponenten enthalten, insbesondere anorganische Füllstoffe, Ruße, Gleitmittel und/ oder Stabilisatoren.

Erfindungswesentlich ist es dabei, daß einerseits ein spezielles Polyethylen mit sehr geringem Schmelzindex MFI (190/2,16) von < 0,1 [g/10 min], insbesondere MFI (190/5) von < 0,1 [g/10 min] und bevorzugt MFI (190/21,6) von < 5 [g/10 min] nach DIN 53 735 und andererseits ein Mineralöl mit einem Anteil von 16 bis 28 Gew.-Tln. je 100 Gew.-Tln. Polyolefinkautschuk eingesetzt wird.

Es hat sich überraschend herausgestellt, daß die erfindungsgemäß ausgewählten PE-Typen ihre vorteilhaften Eigenschaften - Verbesserung der Reißdehnung bei 80 °C - in ausreichendem Maße nur bei Anwesenheit bestimmter Mengen eines Mineralöls entfalten.

Bevorzugt wird der Polyethylenanteil zwischen 25 und 50 Gew.-Tln. je 100 Gew.-Tln. Polyolefinkautschuk eingestellt. Bei Polyethylen-Anteilen < 25 Gew.-Tln. je 100 Gew.-Tln. Polyolefinkautschuk ergeben sich zu geringe Reißfestigkeiten und Reißdehnungen bei 80 °C, während bei Polyethylenanteilen > 50 Gew.-Tln. je 100 Gew.-Tln. Polyolefinkautschuk die Steifigkeit für viele Anwendungszwecke, z.B. Dachabdichtungsbahnen, zu hoch wird.

Unbeschadet dessen können jedoch zusätzlich zu den Mengen an erfindungsgemäßem Polyethylen weitere Anteile Polyethylen mit höherem MFI zugesetzt werden, ohne das günstige Eigenschaftsbild hinsichtlich Reißdehnung bei 80 °C zu verschlechtern.

Die erfindungsgemäßen Dichtungsbahnen weisen durch den Einsatz von elastomeren vulkanisierbaren, aber nicht vulkanisierten Polyolefinkautschuken vorteilhafte Eigenschaften wie Thermoverschweißbarkeit, Witterungs- und Alterungsbeständigkeit auf und benötigen wegen ihrer hohen Festigkeit und Reißdehnung keine Verstärkungseinlage. Da keine Vulkanisationsbeschleuniger eingesetzt werden, bestehen auch keine Lagerungsprobleme für noch nicht verlegte Dichtungsbahnen derart, daß ein unerwünschtes langsames Ausvulkanisieren eintreten könnte. Auch eine später evtl. notwendige Reparatur einer mechanisch beschädigten Stelle kann durch Aufschweißen einer frischen Bahn mittels Warmgas ausgeführt werden.

Als Dachabdichtungsbahnen mit vorwiegend kautschukelastischem Griff, d.h geringer Steifigkeit, enthalten die Rezepturen vorteilhaft 25 bis 50 Gew.-Tle. des ausgewählten Polyethylentyps je 100 Gew.-Tle. Polyolefinkautschuk. Sind höhere Steifigkeiten der Bahnen nicht hinderlich bei der Verarbeitung, wie z.B. als Deponie- oder Tankfeldabdichtungen, so werden Rezepturen mit höheren Polyethylenanteilen verwendet, da diese insbesondere auch bei 80 °C noch sehr hohe Reißfestigkeiten, gekoppelt mit hohen Reißdehnungswerten, aufweisen.

Um die an eine Dichtungsbahn gestellten Anforderungen bezüglich der mechanischen Eigenschaften, insbesondere Kältefestigkeit, Perforationsfestigkeit auch bei höheren Temperaturen, Schrumpfarmut, Reißfestigkeit, Dehnfähigkeit und Dimensionsstabilität, zu gewährleisten, werden als elastomere Kunststoffe insbesondere teilkristalline Ethylen-Propylen-Terpolymere oder teilkristalline Ethylen-Propylen-Copolymere oder Mischungen hiervon eingesetzt.

Im Rahmen der vorliegenden Erfindung sind unter Polyolefinkautschuken, die die Basis der erfindungsgemäßen thermoplastischen Massen bilden, bevorzugt Polymere zu verstehen, die aus Ethylen, einem oder

mehreren $\alpha$-Olefinen mit 3 bis 8 C-Atomen, vornehmlich Propylen, und ggf. einem oder mehreren Mehrfach-Olefinen mit Hilfe sogenannter Ziegler-Natta-Katalysatoren, die zusätzlich noch Aktivatoren und Modifikatoren enthalten können, in Lösung oder Dispersion bei Temperaturen von -30 bis +100 °C hergestellt werden können, z.B. nach den Verfahren gemäß der DE-AS 15 70 352, DE-AS 15 95 442, DE-AS 17 20 450 oder der DE-OS 24 27 343.

Hierunter fallen gesättigte Polyolefinkautschuke, die aus 15 bis 90 Gew.-%, vorzugsweise 30 bis 75 Gew.-% Ethylen und aus 85 bis 10 Gew.-%, vorzugsweise 70 bis 25 Gew.-% Propylen und/oder Buten-(1) bestehen, und ungesättigte Polyolefinkautschuke, die außer aus Ethylen und Propylen oder Buten-(1) aus einem Mehrfach-Olefin bestehen, und zwar in einer solchen Menge, daß in den Kautschuken 0,5 bis 30 Doppelbindungen/1.000 C-Atome enthalten sind. Besonders bevorzugte Mehrfach-Olefine sind cis- und trans-Hexadien-(1.4), Dicyclopentadien, 5-Methylen-, 5-Ethyliden- und 5-Isopropylen-2-norbornen.

Bevorzugt wird ein EPM mit einem Ethylen-Gehalt größer 65 Gew.-% und Propylen-Gehalt kleiner 35 Gew.-% bzw. ein EPDM mit einem Ethylen-Gehalt größer als 65 Gew.-% und Propylen-Gehalt kleiner 30 Gew.-% und maximal 8 Gew.-% Dienkomponente, vorzugsweise weniger als 5 Gew.-% Dienkomponente, eingesetzt. Als Dienkomponente kommt beispielsweise Ethylidennorbornen in Frage. Der Teilkristallinitätsgrad der eingesetzten EPDM-und /oder EPM-Typen wird nach der DSC-Methode im Differenzialabtast-Kaloriemeter gemessenen Schmelzkurve bestimmt. Das Maximum des Schmelzpeaks, gemessen als Temperatur TS in °C nach der DSC-Kurve, wird als endothermer Peak bezeichnet, der sehr eng sein oder aber auch einen größeren Bereich umfassen kann. Bei Ethylen-Propylen-Terpolymeren liegt die Temperatur TS im Bereich um 50° C. Die zum Schmelzen benötigte Wärmemenge, die sogenannte Schmelzwärme $H_{50}$, gemessen ebenfalls nach der DSC-Wärme, gibt dann Aufschluß über das Vorhandensein kristalliner Blöcke im Ethylen-Propylen-Terpolymer bzw. Ethylen-Propylen-Copolymer. Solche teilkristallinen EPDM- bzw. EPM-Typen mit einer Schmelzwärme von mindestens 10 [J/g] werden erfindungsgemäß bevorzugt eingesetzt.

Für die Auswahl geeigneter elastomerer Kunststoffe, insbesondere der EPDM- und EPM-Typen ist auch die Festigkeit derselben von Bedeutung, wobei erfindungsgemäß solche EPDM- und EPM-Typen eingesetzt werden, die eine Reißfestigkeit, gemessen nach DIN 53 455, von mindestens 5 [N/mm$^2$] aufweisen.

Als Polyolefine, die den erfindungsgemäßen Massen zugesetzt werden, sind zunächst einmal die kristallinen und teilkristallinen Modifikationen des Polyethylens mit Dichten von 0,905 bis 0,975 [g/cm$^3$] und Schmelzindizes (190/2,16) von < 0,1 [g/10 min] geeignet. Eingesetzt werden können aber auch teilkristalline Copolymere des Ethylens mit anderen $\alpha$-Olefinen innerhalb dieser Spezifikationsgrenzen, die 0,5 bis 30 Gew.-%, bevorzugt bis 20 Gew.-% Comonomere enthalten.

Geeignete Mineralöle sind solche mit kinematischen Viskositäten zwischen 50 x 10$^{-6}$[m$^2$/s] (50 cSt) und 5 x 10$^{-3}$ [m$^2$/s](5.000 cSt) bei 20 °C, vorzugsweise 200 x 10$^{-6}$ [m$^2$/s] (200 cSt) bis 3 x 10$^{-3}$ [m$^2$/s] (3.000 cSt) bei 20 °C und einer Dichte von 0,84 bis 0,98 [g/cm$^3$]. Die Öle können sowohl paraffinisch als auch naphthenisch oder aromatisch gebundene Kohlenstoffatome enthalten.

Die erfindungsgemäßen Formmassen enthalten bevorzugt auf 100 Gew.-Tle. Polyolefinkautschuk zusätzlich 20 bis 80 Gew.-Tle. eines anorganischen Füllstoffs, 10 bis 50 Gew.-Tle. eines Rußes sowie 0,5 bis 5 Gew.-Tle. Gleitmittel und Stabilisatoren.

Als Füllstoffe werden bevorzugt 40 bis 60 Gew.-Tle. anorganische Füllstoffe wie Kreide, Kaolin, Talkum, Schwerspat und/oder Glasfasern in Mischung mit Kieselerde oder nur Kieselerde eingesetzt.

Die Auswahl geeigneter Füllstoffe ist für die Kunststoffschichten und Zusatzstoffe, die synergistisch zusammenwirken und die Eigenschaften der Dichtungsbahn, insbesondere ihre mechanische, verbessern, von ausschlaggebender Bedeutung. Hierbei bilden eine wesentliche Komponente halbaktive oder aktive Ruße, sogenannte verstärkende Ruße, wobei die Schichten zwischen 10 bis 50 Gew.-Tle., vorzugsweise 20 bis 40 Gew.-Tle. Ruße je 100 Gew.-Tle. Polyolefinkautschuk enthalten. Beispielsweise kommen nach dem Furnace-Verfahren hergestellte Ruße in Frage, die mittlere Teilchengrößen zwischen 30 und 60 [$\mu$m] aufweisen und eine BET-Oberfläche zwischen 30 und 60 [m$^2$/g] zeigen.

Als verstärkende Füllstoffe und zugleich zur Verbilligung des Produktes wird bevorzugt Kieselerde, z.B. ein Gemisch aus Kieselsäureanhydrid und Kaolinit, eingesetzt, wobei die Korngrößen kleiner als 20 [um] sind und ein Anteil von mindestens 40 % des Gemischs Korngrößen kleiner als 2 [$\mu$m] aufweist. Es ist jedoch auch möglich, bis zu 2/3 des Kieselerdeanteiles durch andere, ebenfalls feinkörnige Füllstoffe wie Kreide, Kaolin, Talkum, Schwerspat, Glasfasern oder Mischungen hiervon zu ersetzen.

Zusätzlich enthalten die Schichten der Dichtungsbahn Stabilisatoren und Alterungsschutzmittel, insbesondere auf Basis sterisch gehinderter phenolischer Antioxidantien, phenolischer Phosphite, Thioester aliphatischer Carbonsäuren und ähnliche. Als Gleitmittel für die Verarbeitung werden insbesondere Metallseifen, beispielsweise Calciumseifen, Calciumstearat, Zinkstearat und als Verarbeitungshilfsmittel insbesondere Montansäureester und/oder hydrierte Kohlenwasserstoffe eingesetzt.

Die Eigenschaften der erfindungsgemäßen Dichtungsbahn sind den Anforderungen im Bauwesen angepaßt. Neben der Funktionstüchtigkeit bei Raumtemperatur ist die Funktionstüchtigkeit sowohl bei tiefen Temperaturen bis -60 °C als auch bei hohen Temperaturen bis etwa 80 °C gegeben. Beständigkeit gegen Witterungseinflüsse und biologische Resistenz ist ebenso gegeben. Darüber hinaus ist aber die leichte Verarbeitbarkeit und die Herstellung von dichten Nahtverbindungen durch das einfache und im Bauwesen eingeführte und bewährte Heißluftschweißen möglich.

Gemischt wird die Formmasse entweder kontinuierlich in einem Schneckenkneter oder beispielsweise diskontinuierlich in einem Innenkneter, z.B. Stempelkneter. Die Mischung wird bei Temperaturen im Mischer auf 130 bis 200 °C zum Schmelzen gebracht. Aus dem Mischer erhält man eine teigige, plastifizierte, noch nicht vollständig homogenisierte Masse, die dann einem Vorwalzwerk zur weiteren Durchmischung zugeführt wird und hier bei Temperaturen zwischen 170 und 185 °C weiterbearbeitet wird. Anschließend wird die Masse beispielsweise einem Strainer zugeführt und hier abschließend homogenisiert und gefiltert. Beim Austritt aus dem Strainer hat die Masse etwa eine Temperatur von 200 °C. Die so vorbereitete Masse kann nunmehr auf den eigentlichen Kalander gegeben werden, wobei sowohl L-Kalander oder F-Kalander benutzt werden können.

Bei Aufgabe auf den Walzenspalt des Kalanders hat die Masse dann eine Temperatur zwischen etwa 185 bis 190 °C, bei Verlassen der letzten Kalanderwalze etwa eine Temperatur noch von 180 °C. Die beschriebene Verfahrensführung ist vorteilhaft, um ein homogenes blasenfreies Produkt zu erhalten und ist speziell an die für die Herstellung der Dichtungsbahnen eingesetzten Mischungen und Formmassen angepaßt. Für die eingesetzten Materialien und die gewählten Foliendicken sind Abzugsgeschwindigkeiten - d.h. Produktionsgeschwindigkeiten am Kalander - zwischen 10 und 20 [m/min] möglich.

Die wie zur Kalandrierung aufbereitete Masse kann aber auch zum Granulat umgeformt werden und als Granulat im Extrusions- oder Spritzgußverfahren zu Bahnen oder zu Teilen mit Dichtungsfunktion geformt werden.

Bevorzugt beträgt die Reißfestigkeit nach DIN 53 455 bei 80 °C > 0,8 [N/mm2] und insbesondere > 1 [N/mm$^2$].

Die Reißdehnung nach DIN 53 455 beträgt bevorzugt > 600 % bei 80 °C und bei einer Reißfestigkeit nach DIN 53 455 > 0,7 [N/mm$^2$].

### Wege zur Ausführung der Erfindung

Die nachfolgenden erfindungsgemäßen Beispiele und Vergleichsbeispiele dienen zur Erläuterung der vorliegenden Erfindung.

### Beispiele 1 bis 7

In einem Stempelkneter, Typ Werner & Pfleiderer, wird die nachstehend aufgeführte Mischung bei 60 °C eingefüllt und auf eine Massetemperatur von 185 °C geknetet:

| | |
|---|---|
| 100,0 Gew.-Tle. | Ethylen-Propylen-Dien-Kautschuk (EPDM 1), |
| 30,0 Gew.-Tle. | Polyethylen, |
| 22,0 Gew.-Tle. | Extenderöl H 90 (Mineralöl auf überwiegend paraffinischer Basis, Fa. ESSO AG), |
| 45,0 Gew.-Tle. | Kieselkreide Sillitin Z 82 (SiO$_2$-Kaolin-Gemisch, Fa. Hoffmann & Söhne), |
| 38,0 Gew.-Tle. | Ruß Corax N 550 FEF (Halbaktiver Verstärkerruß, Fa. Degussa), |
| 1,8 Gew.-Tle. | Gleitmittel und Stabilisatoren. |

Als EPDM 1 wird ein Kautschuk aus 66 Gew.-% Ethylen, 27 Gew.-% Propylen und 7 Gew.-% Ethylidennorbornen mit einer Polymerrohfestigkeit von 12 [N/mm$^2$] und einer Schmelzwärme von 26 [J/g] eingesetzt.

Der Schmelzindex MFI (190/2,16) der eingesetzten Polyethylentypen wurde zwischen ca. 0,05 [g/10 min] und 8 [g/10 min] wie folgt variiert:

| | |
|---|---|
| **Beispiel 1:** | MFI (190/2,16) = 0,05 [g/10 min), |
| **Beispiel 2:** | MFI (190/2,16) = 0,1 [g/10 min], |
| **Beispiel 3:** | MFI (190/2,16) = 0,5 [g/10 min], |
| **Beispiel 4:** | MFI (190/2,16) = 1 [g/10 min], |
| **Beispiel 5:** | MFI (190/2,16) = 2 [g/10 min], |
| **Beispiel 6:** | MFI (190/2,16) = 5 [g/10 min], |
| **Beispiel 7:** | MFI (190/2,16) = 8 [g/10 min]. |

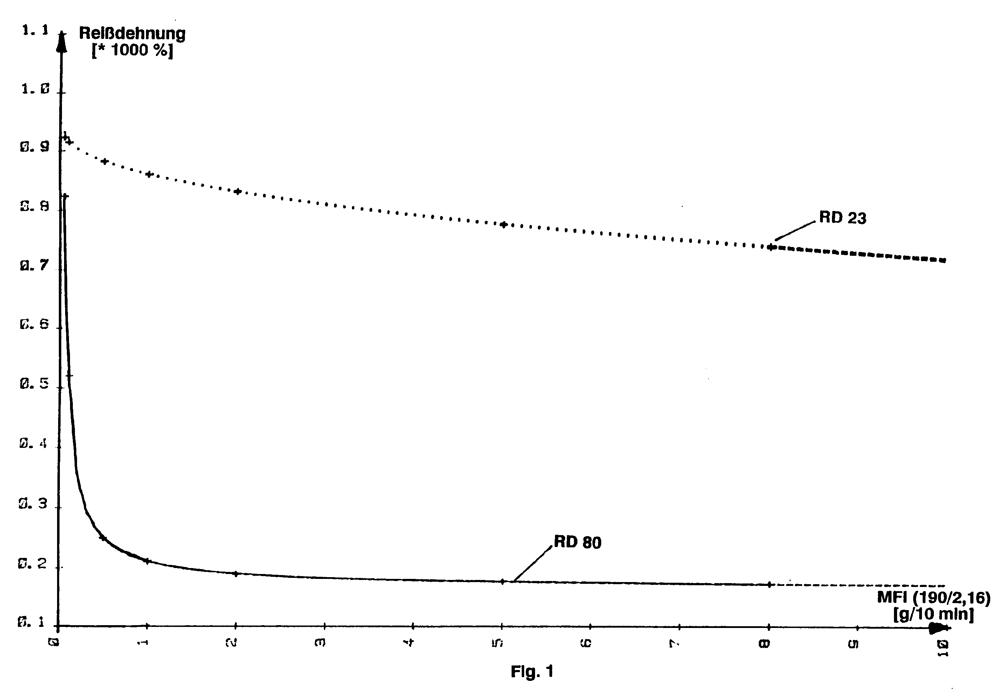

In Figur 1 ist die Reißdehnung bei 23 °C (RD 23) und die Reißdehnung bei 80 °C (RD 80), jeweils gemessen nach DIN 53 455, über dem MFI der Beispiele 1 bis 7 aufgetragen. Die Figur veranschaulicht, daß die Reißdehnung bei 23 °C und geringfügig mit geringerem Schmelzindex ansteigt, während die Reißdehnung bei 80 °C ab einem MFI von 0,1 [g/10 min] ausreichende Werte annimmt. Diese extreme Abhängigkeit der Reißdehnung bei 80 °C vom MFI war völlig überraschend.

**Beispiele 8 bis 11**

In einem Stempelkneter, Typ Werner & Pfleiderer, wird die nachstehend aufgeüfhrte Mischung bei 60 °C eingefüllt und auf eine Massetemperatur von 185 °C geknetet:

| 100,0 Gew.-Tle. | Ethylen-Propylen-Dien-Kautschuk (EPDM 1), |
| 27,0 Gew.-Tle. | Polyethylen, |
| 22,0 Gew.-Tle. | Extenderöl H 90, |
| 45,0 Gew.-Tle. | Kieselkreide Sillitin Z 82, |
| 38,0 Gew.-Tle. | Ruß Corax N 550 FEF, |
| 1,8 Gew.-Tle. | Gleitmittel und Stabilisatoren. |

Als EPDM 1 wird ein Kautschuk aus 66 Gew.-% Ethylen, 27 Gew.-% Propylen und 7 Gew.-% Ethylidennorbornen mit einer Polymerrohfestigkeit von 12 [N/mm$^2$] und einer Schmelzwärme von 26 [J/g] eingesetzt.

Die in den Beispielen 8 bis 11 eingesetzten Polyethylene sind durch ihren MFI (190/2,16), ihre Dichte und ihren Polymerisationstyp in Tabelle 1 beschrieben. Dabei bedeutet:

| LD: | low-density-Polyethylen, |
| LLD: | linear low-density-Polyethylen, |
| HD: | high-density-Polyethylen. |

Die wie oben beschrieben gekneteten Massen werden auf eine Vorwalze von 190 °C gebracht und anschließend einem Kalander mit Walzentemperatur von 180 bis 200 °C zugeführt und zu einer 1 mm dicken Folie kalandriert. Die an diesen Folien gemessenen Reißfestigkeiten bei 23 °C (RF 23) und Reißfestigkeiten bei 80 °C (RF 80) und Reißdehnungen bei 23 °C (RD 23) und Reißdehnungen bei 80 °C (RD 80) sind ebenfalls in Tabelle 1 aufgelistet.

**Beispiele 12 bis 15**

Die Beispiele 12 bis 15 sind Vergleichsbeispiele, die der DE-OS 26 57 272 entnommen wurden (s. dort Beisp. 1, 2, 4 und 5). Die Reißfestigkeiten und Reißdehnungen wurden im Gegensatz zu den Beispielen 8 bis 11 nicht bei 80 °C, sondern bei 70 °C gemessen. Die Meßwerte in Tabelle 1 sind daher in Klammern aufgeführt. Die mengenmäßige Zusammensetzung ist ebenfalls in Tabelle 1 dargestellt.

**Beispiele 16 bis 18**

Die in der Tabelle 1 aufgeführten Mengen und Qualitäten werden gemäß Beispiel 8 aufbereitet und zu Folien kalandriert. Die an den so hergestellten Folien gemessenen Festigkeits- und Dehnungswerte sind in Tabelle 1 gezeigt.

## Tabelle 1

| Beispiel | Polyethylen Gew.-Tle. | MFI(190/2,16) | Typ | Öl (Bit.) Gew.-Tle. | anorg. Füllst. Gew.-Tle. | Ruß Gew.-Tle. | RF 23 (N/mm$^2$) | RF 80 (70) | RD 23 (%) | RD 80 (70) |
|---|---|---|---|---|---|---|---|---|---|---|
| 8 | 27 | < 0,1 | HD | 22 | 45 | 38 | 14,6 | 0,80 | 760 | 812 |
| 9 | 27 | 8 | HD | 22 | 45 | 38 | 12,0 | 0,44 | 752 | 114 |
| 10 | 27 | 4 | LD | 22 | 45 | 38 | 11,4 | 0,47 | 742 | 112 |
| 11 | 27 | 5 | LLD | 22 | 45 | 38 | 11,6 | 0,33 | 756 | 194 |
| 12*1 | 50,6 | 8 | LD | -- | -- | 90 | 8,2 | (2,6) | 860 | (240) |
| 13*2 | 50,6 | 8 | LD | (33,4) | -- | 145 | 5,8 | (2,6) | 400 | (220) |
| 14*3 | 100 | 0,7 | HD | (30) | 40 | 90 | 9,1 | (3,5) | 710 | (290) |
| 15*4 | 145 | 0,5 | HD | (30) | 40 | 90 | 10,9 | (4,4) | 760 | (420) |
| 16 | 0 | -- | -- | 20 | 70 | 50 | 7,0 | 0,04 | 750 | 350 |
| 17 | 0 | -- | -- | 19 | 70 | 40 | 9,0 | 0,23 | 520 | 120 |
| 18 | 50 | 4 | LD | 10 | 120 | 10 | 12,5 | 1,1 | 650 | 75 |

*1 Beispiel 5 der DE-OS 26 57 272
*2 Beispiel 1 der DE-OS 26 57 272
*3 Beispiel 2 der DE-OS 26 57 272
*4 Beispiel 4 der DE-OS 26 57 272

Werte in
()=Bitumen

Werte in () = Prüfwerte bei 70 °C

EP 0 429 504 B1

Wie aus den Beispielen der Tabelle 1 zu ersehen ist, weisen die Reißdehnungen der Vergleichsbeispiele 9 bis 18 bei 23 °C trotz unterschiedlicher Rezeptur sehr hohe Werte aus. Bei erhöhten Temperaturen von 80 °C bzw. 70 °C gehen jedoch die Reißdehnungswerte drastisch zurück, bis auf das erfindungsgemäße Beispiel 8, in dem ein PE mit einem sehr hohen Molekulargewicht = niedrigem MFI verwendet wurde. Aus den Dehnungswerten bei 23 °C ist also in keiner Weise auf das Verhalten der Materialien bei erhöhten Temperaturen, wie z.B. bei 80 °C zu schließen, und es war um so überraschender, daß durch die erfindungsgemäßen speziellen Polyethylentypen die dargestellte Eigenschaftsverbesserung erreicht werden konnte.

**Beispiele 19 bis 33**

Die in Tabelle 2 aufgezeigten Mengen und Arten werden wie in Beispiel 8 beschrieben, jedoch mit einem Ethylen-Propylen-Dienkautschuk (EPDM 2) mit einem Ethylengehalt von 67 Gew.-%, einem Propylengehalt von 30 Gew.-% und einem Diengehalt von 3 Gew.-% Ethylidennorbornen mit einer Polymerrohfestigkeit von 13,5 [N/mm$^2$] und einer Schmelzwärme von 30 [J/g] aufbereitet, zu einer Folie verarbeitet und gemessen.

Bei den Vergleichsbeispielen 20, 21, 22, 24 und 25, deren MFI-Werte für das Polyethylen außerhalb der Erfindung liegen, werden nur niedrige Werte für die Reißdehnungen bei 80 °C erreicht. Lediglich im Beispiel 23, bei dem der MFI-Wert des verwendeten Polyethylens im Grenzbereich der Erfindung liegt, werden höhere Reißdehnungswerte erreicht, ohne jedoch den bevorzugten Bereich > 600 % zu erreichen.

Die Beispiele 30, 32, und 33 zeigen, daß bei zu geringer Menge an Mineralöl keine ausreichend hohe Reißdehnung bei 80 °C erreicht wird, auch nicht durch Erhöhung des Anteils der erfindungsgemäßen Polyethylentype.

## Tabelle 2

| Beispiel | Polyethylen Gew.-Tle. | MFI (190/2,16) | Typ | Öl Gew.-Tle. | anorg. Füllst. Gew.-Tle. | Ruß Gew.-Tle. | RF 23 [N/mm²] | RF 80 | RD 23 [%] | RD 80 |
|---|---|---|---|---|---|---|---|---|---|---|
| 19 | 27 | < 0,1 | HD | 22 | 45 | 38 | 14,0 | 0,70 | 820 | 1.330 |
| 20 | 27 | 0,45 | HD | 22 | 45 | 38 | 12,8 | 0,36 | 846 | 276 |
| 21 | 27 | 0,25 | LD | 22 | 45 | 38 | 10,7 | 0,50 | 790 | 124 |
| 22 | 27 | 3,3 | LLD | 22 | 45 | 38 | 13,2 | 0,13 | 870 | 298 |
| 23 | 27 | 0,1 | HD | 22 | 45 | 38 | 12,7 | 0,35 | 850 | 522 |
| 24 | 27 | 0,2 | LLD | 22 | 45 | 38 | 14,1 | 0,52 | 844 | 338 |
| 25 | 27 | 1,0 | LLD | 22 | 45 | 38 | 14,2 | 0,17 | 866 | 372 |
| 26 | 30 | < 0,1 | HD | 16 | 45 | 0 | 19,9 | 1,1 | 1.150 | 610 |
| 27 | 45 | < 0,1 | HD | 22 | 45 | 38 | 18,2 | 1,7 | 990 | 970 |
| 28 | 90 | < 0,1 | HD | 22 | 45 | 38 | 19,5 | 2,5 | 970 | 1.100 |
| 29 | 150 | < 0,1 | HD | 22 | 45 | 38 | 19,2 | 5,5 | 610 | 1.100 |
| 30 | 25 | < 0,1 | HD | 5 | 45 | 38 | 19,0 | 1,4 | 900 | 400 |
| 31 | 27 | < 0,1 | HD | 22 | 60 | 38 | 15,6 | 1,1 | 980 | 600 |
| 32 | 27 | < 0,1 | HD | 10 | 45 | 10 | 21,8 | 1,0 | 1.070 | 470 |
| 33 | 50 | < 0,1 | HD | 10 | 120 | 10 | 15,0 | 2,0 | 790 | 500 |

EP 0 429 504 B1

**Beispiel 34**

Eine Mischung, bestehend aus

| | |
|---|---|
| 100,0 Gew.-Tle. | Ethylen-Propylen-Dien-Kautschuk (EPDM 2), |
| 25,0 Gew.-Tle. | Polyethylen MFI (190/5) < 0,1 [g/10 min], |
| 25,0 Gew.-Tle. | Polyethylen MFI (190/2,16) von 1 [g/10 min], |
| 22,0 Gew.-Tle. | Extenderöl H 90, |
| 45,0 Gew.-Tle. | Kieselkreide Sillitin Z 82, |
| 38,0 Gew.-Tle. | Ruß Corax N 550 FEF, |
| 1,8 Gew.-Tle. | Gleitmittel und Stabilisatoren |

wird wie im Beispiel 8 beschrieben aufbereitet und zu einer Folie von 1 mm kalandriert. Die gemessenen Eigenschaften waren:

RF 23 °C: 19,5 N/mm$^2$    RD 23 °C: 1060 %

RF 80 °C: 1,2 N/mm$^2$    RD 80 °C: 800 %.

Wie die Meßwerte zeigen, können den Mengen an erfindungsgemäßem Polyethylen weitere Mengen an Polyethylen mit höherem MFI zugesetzt werden, ohne die geforderte hohe Reißdehnung bei 80 °C zu verschlechtern.

**Patentansprüche**

1.  Formmasse aus elastomeren Polyolefinkautschuken, Polyethylen und/oder Ethylencopolymeren, Mineralöl und Zusatzstoffen, **dadurch gekennzeichnet**, daß die Formmasse enthält auf

    a) 100 Gew.-Tle. Polyolefinkautschuk:

    b) 25 bis 150 Gew.-Tle. Polyethylen und/oder Ethylencopolymer mit einem MFI (190/2,16) < 0,1 [g/10 min] nach DIN 53 735;

    c) 16 bis 28 Gew.-Tle. eines Mineralöls.

2.  Formmasse nach Anspruch 1, **dadurch gekennzeichnet**, daß die Formmasse auf 100 Gew.-Tle. Polyolefinkautschuk zusätzlich

    d) anorganische Füllstoffe,

    e) Ruße,

    f) Gleitmittel und/oder Stabilisatoren,

    g) weitere Komponenten, insbesondere Polyethylen und/ oder Ethylencopolymer mit einem MFI (190/2,16) >0,1 [g/10 min] enthält.

3.  Formmasse nach Anspruch 1, dadurch gekennzeichnet, daß die Formmasse auf 100 Gew.-Tle. Polyolefinkautschuk zusätzlich

    d) 20 bis 80 Gew.-Tle. eines anorganischen Füllstoffs,

    e) 10 bis 50 Gew.-Tle. eines Rußes und

    f) 0,5 bis 5 Gew.-Tle. Gleitmittel und Stabilisatoren aufweist.

4.  Formmasse nach einem der Ansprüche 1 bis 3, **dadurch gekennzeichnet**, daß das eingesetzte Polyethylen bzw. Ethylencopolymer b) einen MFI (190/5) < 0,1 [g/10 min] sowie MFI (190/21,6) < 5 [g/10 min] nach DIN 53 735 aufweist.

5.  Formmasse nach einem der Ansprüche 1 bis 4, **dadurch gekennzeichnet**, daß der unter a) verwendete Kautschuk ein sogenannter teilkristalliner Sequenzkautschuk ist und mindestens eine Polymerrohfestigkeit von 5 [N/mm$^2$] aufweist.

6.  Formmasse nach einem der Ansprüche 1 bis 5, **dadurch gekennzeichnet**, daß die verwendeten Polyethylene oder Ethylencopolymere in Mengen von 25 bis 50 Gew.-Tle. enthalten sind.

7.  Formmasse nach einem der Ansprüche 1 bis 6, **dadurch gekennzeichnet**, daß die verwendeten Ethylencopolymerisate 0,5 bis 20 Gew.-% $C_3$-$C_8$-Olefine als Comonomeren enthalten.

8.  Formmasse nach einem der Ansprüche 1 bis 7, **dadurch gekennzeichnet**, daß als Füllstoffe 40 bis 60 Gew.-Tle. anorganische Füllstoffe wie Kreide, Kaolin, Talkum, Schwerspat und/oder Glasfasern in Mischung mit Kieselerde oder nur Kieselerde enthalten sind.

9. Formmasse nach einem der Ansprüche 1 bis 8, **dadurch gekennzeichnet**, daß verstärkende oder halbverstärkende Ruße in einer Menge von 20 bis 40 Gew.-Tle., bezogen auf 100 Gew.-Tle. Polyolefinkautschuk, eingesetzt werden.

10. Verwendung einer Formmasse nach einem der Ansprüche 1 bis 9 zur Herstellung von elastischen Dichtungsbahnen durch Kalandrieren oder Extrudieren.

11. Verwendung nach Anspruch 10, **dadurch gekennzeichnet**, daß die Reißfestigkeit nach DIN 53 455 bei 80 °C > 0,8 [N/mm$^2$] und bevorzugt > 1 [N/mm$^2$] beträgt.

12. Verwendung nach einem der Ansprüche 10 oder 11, **dadurch gekennzeichnet**, daß die Reißdehnung nach DIN 53 455 > 600 % bei 80° C bei einer Reißfestigkeit nach DIN 53 455 > 0,7 [N/mm$^2$] bei 80° C beträgt.

## Claims

1. A moulding compound made of elastomeric polyolefin rubbers, polyethylene and/or ethylene copolymers, mineral oils and additives, **characterized in that** the moulding compund comprises per
   a) 100 parts by weight of polyolefin rubbers:
   b) 25 to 150 parts by weight of polyethylene and/or ethylene copolymers having a MFI (190/2,16) of less than 0,1 [g/10 min] according to DIN 53 735;
   c) 16 to 28 parts by weight of a mineral oil.

2. A moulding compound according to claim 1, **characterized in that** the moulding compund comprises per 100 parts by weight of polyolefin rubber additionally:
   d) inorganic fillers;
   e) carbon blacks;
   f) lubricants and/or stabilizers;
   g) further components, especially polyethylene and/or ethylene copolymers with a MFI (190/2,16) greater than 0,1 [g/10 min].

3. A moulding compound according to claim 1, **characterized in that** the moulding compound comprises per 100 parts by weight of polyolefin rubber additionally:
   d) 20 to 80 parts by weight of an inorganic filler;
   e) 10 to 50 parts by weight of carbon black; and
   f) 0,5 to 5 parts by weight of lubricants and stabilizers.

4. A moulding compound according to one of claims 1 to 3, **characterized in that** said polyethylene or ethylene copolymers under b) have a MFI (190/5) of less than 0,1 [g/10 min] and a MFI (190/21,6) of less than 5 [g/10 min] according to DIN 53 735.

5. A moulding compound according to one of claims 1 to 4, **characterized in that** said rubber used under a) is a so-called partly crystalline sequential rubber and comprises at least a polymer bulk strength of 5 N/mm$^2$.

6. A moulding compound according to one of claims 1 to 5, **characterized in that** the used polyethylene or ethylene copolymers used are contained in amounts of 25 to 50 parts by weight.

7. A moulding compound according to one of claims 1 to 6, **characterized in that** the ethylene copolymers used contain 0,5 to 20% by weight of C$_3$ - C$_8$ olefins as comonomers.

8. A moulding compound according to one of claims 1 to 7, **characterized in that** said compound contains, as fillers, 40 to 60 parts by weight of inorganic fillers such as chalk, kaolin, talcum, baryte and/or glass fibres mixed with silica or silica only.

9. A moulding compound according to one of claims 1 to 8, **characterized in that** reinforcing or semi-reinforcing carbon blacks are used in amounts of 20 to 40 parts by weight per 100 parts by weight of polyolefin rubber.

10. Use of a moulding compound according to one of claims 1 to 9 to produce elastic sealing sheetings by the calendering or extrusion process.

11. Use according to claim 10, **characterized in that** the tensile strength of the sealing sheeting according to DIN 53 455 is greater than 0,8 [N/mm$^2$] and preferably greater than 1 [N/mm$^2$] at 80°C.

12. Use according to one of claims 10 or 11, **characterized in that** the elongation at rupture according to DIN 53 455 at 80°C is greater than 600% and the tensile strength according to DIN 53 455 is greater than 0,7 [N/mm$^2$] at 80°C.

**Revendications**

1. Matière à mouler constituée de caoutchoucs de polyoléfine élastomères, de polyéthylène et/ou de copolymère d'éthylène, d'huile minérale et d'additifs, caractérisée en ce qu'elle contient, pour a) 100 parties en poids de caoutchouc de polyoléfine :
   b) 25 à 150 parties en poids de polyéthylène et/ou de copolymère d'éthylène, ayant un MFI (190/2,16) < 0,1 (g/10 min), le MFI étant déterminé selon DIN 53 735,
   c) 16 à 28 parties en poids d'une huile minérale.

2. Matière à mouler selon la revendication 1, caractérisée en ce qu'elle contient en plus, pour 100 parties en poids de caoutchouc de polyoléfine :
   d) des charges minérales,
   e) du noir de carbone,
   f) des lubrifiants et/ou des stabilisants,
   g) d'autres constituants, en particulier un polyéthylène et/ou un copolymère d'éthylène, ayant un MFI (190/2,16) > 0,1 (g/10 min).

3. Matière à mouler selon la revendication 1, caractérisée en ce qu'elle contient en plus, pour 100 parties en poids de caoutchouc de polyoléfine:
   d) 20 à 80 parties en poids d'une charge minérale,
   e) 10 à 50 parties en poids d'un noir de carbone, et
   f) 0,5 à 5 parties en poids de lubrifiants et de stabilisants.

4. Matière à mouler selon l'une quelconque des revendications 1 à 3, caractérisée en ce que le polyéthylène ou copolymère d'éthylène b) utilisé présente un MFI (190/5) < 0,1 (g/10 min) et un MFI (190/21,6) < 5 (g/10 min), les MFI étant déterminés selon DIN 53 735.

5. Matière à mouler selon l'une quelconque des revendications 1 à 4, caractérisée en ce que le caoutchouc utilisé en a) est un caoutchouc dit caoutchouc séquencé partiellement cristallin et présente une résistance brute de polymère d'au moins 5 N/mm$^2$.

6. Matière à mouler selon l'une quelconque des revendications 1 à 5, caractérisée en ce que les polyéthylènes ou copolymères d'éthylène utilisés sont présents dans ladite matière en une quantité de 25 à 50 parties en poids.

7. Matière à mouler selon l'une quelconque des revendications 1 à 6, caractérisée en ce que les copolymères d'éthylène utilisés renferment, en tant que comonomères, 0,5 à 20 % en poids d'oléfines en $C_3$ à $C_8$.

8. Matière à mouler selon l'une quelconque des revendications 1 à 7, caractérisée en ce que sont présentes dans ladite matière, en tant que charges, 40 à 60 parties en poids de charges minérales, telles que craie, kaolin, talc, barytine et/ou fibres de verre en mélange avec de la silice, ou seulement de la silice.

9. Matière à mouler selon l'une quelconque des revendications 1 à 8, caractérisée en ce que l'on utilise des noirs de carbone renforçateurs ou semi-renforçateurs, en une quantité de 20 à 40 parties en poids pour 100 parties en poids de caoutchouc de polyoléfine.

10. Utilisation d'une matière à mouler selon l'une quelconque des revendications 1 à 9, pour la préparation de bandes d'étanchéité élastiques par calandrage ou extrusion.

11. Utilisation selon la revendication 10, caractérisée en ce que la résistance à la rupture, déterminée selon DIN 53 455, est, à 80°C, supérieure à 0,8 N/mm², de préférence supérieure à 1 N/mm².

12. Utilisation selon la revendication 10 ou 11, caractérisée en ce que l'allongement à la rupture, déterminé selon DIN 53 455, est, à 80°C, supérieur à 600 %, la résistance à la rupture, déterminée selon DIN 53 455, étant, à 80°C, supérieure à 0,7 N/mm².

Fig. 1